# EUROPEAN PATENT APPLICATION

(11) **EP 4 299 989 A1**
(43) Date of publication of application: **03.01.2024**
(21) Application number: 23170675.5
(22) Date of filing: 28.04.2023
(51) Int. Cl.: F24C 15/00, A23L 33/155, F24C 7/08

(54) **A COOKING DEVICE COMPRISING A UV LIGHT SOURCE**

(30) Priority: 27.06.2022 TR 202210585
(71) Applicant: Arçelik Anonim Sirketi, 34445 Istanbul (TR)
(72) Inventor: MET, AYLIN, 34445 ISTANBUL (TR); KOMURLU, EDANUR, 34445 ISTANBUL (TR); KARATAS, HALUK, 34445 ISTANBUL (TR)

(57) **Abstract**

The present invention relates to a cooking device (1) comprising a body (2); a cooking chamber (3) which is provided in the body (2) and wherein the cooking process is performed; a heater (4) which performs the cooking process; a UV light source (5) which is provided on the cooking chamber (3) and which has an active position where the UV light source (5) radiates into the cooking chamber (3) and a passive position where the radiation is interrupted; and a sheet metal housing (6) which is disposed so as to extend from the UV light source towards the inner surface of the cooking chamber (3) and which increases the area of radiation by means of the concave form thereof.

## Description

The present invention relates to a cooking device comprising a UV light source.

In ovens, the cooking process is realized in the cooking chamber by means of a heater. The foodstuffs to be cooked are loaded into the cooking chamber by the user. Depending on the characteristics of the cooking device, the user can determine the type of foodstuff or the cooking method by means of the control panel. Cooking devices, which allow the selection of a foodstuff type, operate the cooking algorithm suitable for the selected foodstuff type. Cooking devices which perform the preheating process automatically depending on the cooking algorithm or perform the preheating with user control are known. After performing the preheating process in the cooking algorithm suitable for the foodstuff, the cooking device warns the user at the appropriate time to place the foodstuff into the cooking chamber such that the foodstuff is cooked more efficiently at the ideal level. In recent years, it has become common for users to cook bakery products such as bread at home. The users add the desired foodstuffs into the bread and cook the same in the cooking devices. Thus, bakery products with high nutritional value are obtained. Studies show that there are vitamins activated on the foodstuffs under suitable environmental conditions. It is determined that bakery products containing yeast and vegetables containing ergosterol synthesize vitamin D under UV light before being cooked. However, since the UV light sources provided in the cooking devices are used for disinfection, said light sources are generally applied to the surface area of the cooking chamber or at different wavelengths. Vegetable-based vitamin D precursor in vegetables and bakery products cooked without the application of UV light is cooked without entering vitamin D synthesis.

In the state of the art European Patent Document No. EP1934531, a cooking device is disclosed, comprising a UV light source.

The aim of the present invention is the realization of a cooking device which provides customer satisfaction.

The cooking device realized in order to attain the aim of the present invention, explicated in the first claim and the respective claims thereof, comprises a body; a cooking chamber which is provided in the body; a heater which provides the heating of the cooking chamber; a UV light source which is provided on the cooking chamber; and a sheet metal housing wherein the UV light source is disposed. The UV light source radiates towards the cooking chamber through the cooking chamber. By means of the sheet metal housing, the rays are reflected so as to reach more areas. The UV light source is in the active position while radiating into the cooking chamber and in the passive position while not radiating.

The cooking device of the present invention comprises a control unit which enables the UV light source to be in the active position for a predetermined period of time depending on the type of foodstuff selected. The UV light source is switched to the active position before the foodstuff is cooked. Thus, the UV light is sent onto the raw foodstuff.

In an embodiment of the present invention, the cooking device comprises the control unit which enables the UV light source to be switched to the active position when a foodstuff type containing ergosterol is selected. Ergosterol provides the synthesis of vitamin D by means of the UV light. Thus, the nutritional value of the foodstuffs to be cooked increases.

In an embodiment of the present invention, the cooking device comprises the control unit which enables the UV light source to be switched to the active position when a foodstuff type containing yeast is selected. By means of the UV light source, the plant-based vitamin D precursor found in the foodstuffs containing yeast is converted into vitamin D. Thus, the nutritional value of the foodstuff increases.

In an embodiment of the present invention, the cooking device comprises a display means which is provided on the cooking chamber and which enables the cooking process to be monitored, and the control unit which enables the UV light source to be switched to the active position or the passive position depending on the information received from the display means. By means of the display means, the degree of cooking of the foodstuff placed in the cooking chamber can be monitored instantly. Thus, when the foodstuff starts to cook, the UV light source is switched to the passive position and the UV radiation is stopped. The UV light source is switched to the active position before the foodstuff is cooked.

In an embodiment of the present invention, the cooking device comprises a control panel which enables the user to set cooking parameters, and a UV control button which is provided on the control panel. By means of the UV control button, the user can switch the UV light source between the active position and the passive position.

By means of the present invention, a cooking device is realized, wherein the nutritional value of the foodstuffs is increased by means of the UV light source.

A cooking device realized in order to attain the aim of the present invention is illustrated in the attached figures, where:

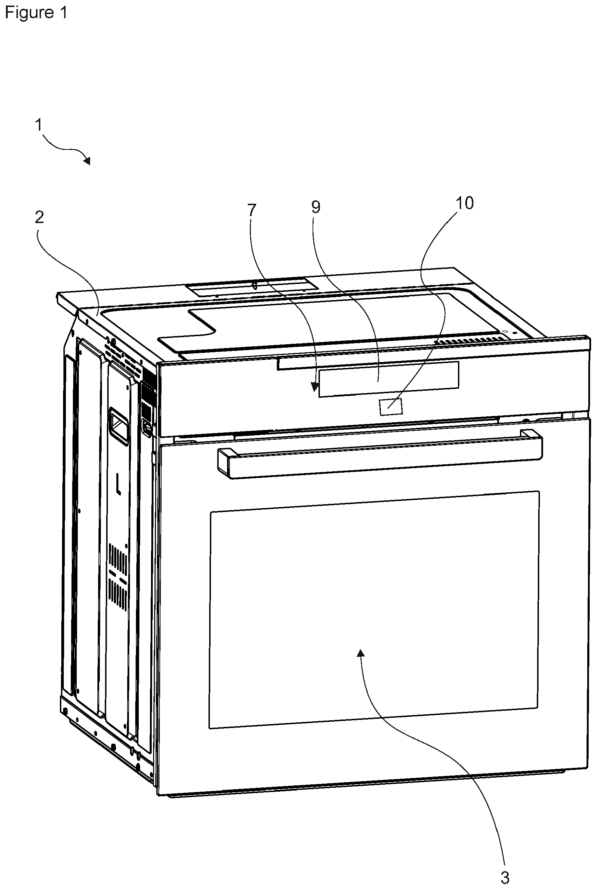

Figure 1 - is the perspective view of the cooking device.

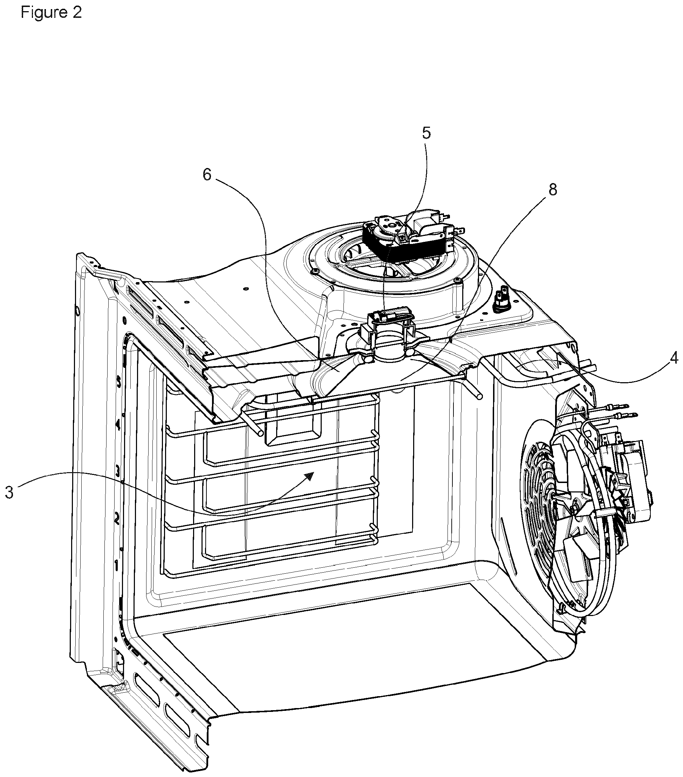

Figure 2 - is the perspective view of the UV light source.

The elements illustrated in the figures are numbered as follows:
1- Cooking device
2- Body
3- Cooking chamber
4- Heater
5- UV light source
6- Sheet metal housing
7- Control unit
8- Display means
9- Control panel
10- UV control button

The cooking device (1) comprises a body (2); a cooking chamber (3) which is provided in the body (2) and wherein the cooking process is performed; a heater (4) which performs the cooking process; a control panel (9) which enables the user to select the cooking parameters; a UV light source (5) which is provided on the cooking chamber (3) and which has an active position where the UV light source (5) radiates into the cooking chamber (3) and a passive position where the radiation is interrupted; and a sheet metal housing (6) which is disposed so as to extend from the UV light source towards the inner surface of the cooking chamber (3) and which increases the area of radiation by means of the concave form thereof. The UV light source (5) radiates into the cooking chamber (3) through the cooking chamber (3). By means of the sheet metal housing (6), the light emitted by the UV light source (5) emanates into a wider area. The UV light source (5) is in the active position while radiating and in the passive position while not radiating.

The cooking device (1) of the present invention comprises a control unit (7) which enables the UV light source (5) to be in the active position before the cooking process for a predetermined period of time depending on the type of foodstuff selected. The UV light source (5) is switched to the active position before the cooking process starts. In the cooking devices which perform automatic cooking where the foodstuff type is selected, the UV light source (5) is switched to the active position depending on the selected foodstuff type. Since the UV light source (5) is activated before the cooking process starts, the UV light comes into contact with the foodstuff which is not cooked. Thus, the vitamin D synthesis is provided for the foodstuffs containing plant-based vitamin D precursors. By means of the UV light source (5), the nutritional value of the foodstuffs is increased.

In an embodiment of the present invention, the cooking device (1) comprises the control unit (7) which enables the UV light source (5) to be switched to the active position when a foodstuff type containing ergosterol is selected. Vitamin D synthesis occurs by means of the contact of the ergosterol with the UV light emitted by the UV light source (5). Foodstuffs containing ergosterol are predefined by the manufacturer in the control unit (7). Depending on the foodstuff type selected by the user, the control unit (7) determines the ergosterol content status of the foodstuff type and switches the UV light source (5) to the active position.

In an embodiment of the present invention, the cooking device (1) comprises the control unit (7) which enables the UV light source (5) to be switched to the active position when a foodstuff type containing yeast is selected. Since the bakery products containing yeast have plant-based vitamin D precursor, vitamin D synthesis occurs when the UV light source (5) is switched to the active position. When the type of bakery product is selected by the user, the control unit (7) switches the UV light source (5) to the active position.

In an embodiment of the present invention, the cooking device (1) comprises a display means (8) which is provided on the cooking chamber (3) and which enables the cooking process to be simultaneously monitored, and the control unit (7) which enables the UV light source (5) to be switched to the active position or the passive position depending on the information received from the display means (8). By means of the display means (8) provided on the cooking chamber (3), the cooking status of the foodstuff in the cooking chamber (3) is enabled to be simultaneously controlled. The display values are predefined in the control unit (7) by the manufacturer. Thus, the cooking status of the foodstuff can be controlled depending on the image. The position of the UV light source (5) is switched to the passive position by the control unit (7) when the foodstuff starts to cook. The UV light source (5) is in the active position before the foodstuff is cooked. Thus, the vitamin D synthesis of the suitable foodstuffs is ensured.

In an embodiment of the present invention, the cooking device (1) comprises a UV control button (10) which is provided on the control panel (9) and which enables the UV light source (5) to be switched between the active position and the passive position. The UV light source (5) can be switched between the active and passive positions by user control. The user can switch the UV light source (5) to the active position by placing foodstuffs containing ergosterol or yeast in the cooking chamber (3). Thus, even if the cooking process is not planned to be carried out, the foodstuff can synthesize vitamin D, hence increasing the nutritional value.

By means of the present invention, a cooking device (1) is realized, wherein the vitamin D values of foodstuffs are increased by means of UV light. By switching the UV light source (5) between the active and passive positions at certain times, the vitamin D synthesis of the suitable foodstuffs is ensured. Thus, the cooking process is performed with the nutritional values of the foodstuffs being increased

## Claims

1. A cooking device (1) **comprising** a body (2); a cooking chamber (3) which is provided in the body (2) and wherein the cooking process is performed; a heater (4) which performs the cooking process; a control panel (9) which enables the user to select the cooking parameters; a UV light source (5) which is provided on the cooking chamber (3) and which has an active position where the UV light source (5) radiates into the cooking chamber (3) and a passive position where the radiation is interrupted; and a sheet metal housing (6) which is disposed so as to extend from the UV light source towards the inner surface of the cooking chamber (3) and which increases the area of radiation by means of the concave form thereof, **characterized by** a control unit (7) which enables the UV light source (5) to be in the active position before the cooking process for a predetermined period of time depending on the type of foodstuff selected.

2. A cooking device (1) as in Claim 1, **characterized by** the control unit (7) which enables the UV light source (5) to be switched to the active position when a foodstuff type containing ergosterol is selected.

3. A cooking device (1) as in Claim 1 or Claim 2, **characterized by** the control unit (7) which enables the UV light source (5) to be switched to the active position when a foodstuff type containing yeast is selected.

4. A cooking device (1) as in any one of the above claims, **characterized by** a display means (8) which is provided on the cooking chamber (3) and which enables the cooking process to be simultaneously monitored, and the control unit (7) which enables the UV light source (5) to be switched to the active position or the passive position depending on the information received from the display means (8).

5. A cooking device (1) as in any one of the above claims, **characterized by** a UV control button (10) which is provided on the control panel (9) and which enables the UV light source (5) to be switched between the active position and the passive position.
